# EUROPEAN PATENT SPECIFICATION

(11) **EP 3 875 444 B1**
(45) Date of publication and mention of the grant of the patent: **08.03.2023**
(21) Application number: 19884736.0
(22) Date of filing: 13.11.2019
(51) Int. Cl.: C04B 28/02, C04B 7/32, C04B 22/00, C04B 111/34

(54) **CEMENT ADMIXTURE, EXPANSION MATERIAL, AND CEMENT COMPOSITION**
ZEMENTBEIMISCHUNG, EXPANSIONSMATERIAL UND ZEMENTZUSAMMENSETZUNG
ADJUVANT DU CIMENT, MATÉRIAU D'EXPANSION ET COMPOSITION DE CIMENT

(30) Priority: 15.11.2018 JP 2018214450; 18.07.2019 JP 2019132910
(43) Date of publication of application: 08.09.2021
(73) Proprietor: Denka Company Limited, Tokyo 103-8338 (JP)
(72) Inventor: MORI, Taiichiro, Itoigawa-city, Niigata 9490393 (JP); SHIMAZAKI, Daiki, Itoigawa-city, Niigata 9490393 (JP); MAEDA, Takumi, Itoigawa-city, Niigata 9490393 (JP); ARANO, Noriyuki, Itoigawa-city, Niigata 9490393 (JP)
(74) Representative: Ter Meer Steinmeister & Partner
(86) International application number: PCT/JP2019/044473
(87) International publication number: WO 2020/100925

(56) References cited:
- WO-A1-2008/114877
- JP-A- S5 493 020
- JP-A- S57 205 363
- JP-A- 2003 012 352
- JP-A- 2005 162 569
- JP-A- 2010 222 171
- JP-A- 2011 084 413
- JP-A- 2015 187 046
- JP-B2- 4 244 261
- US-A- 3 303 037
- US-A- 3 884 710

## Description

### Technical Field

The present invention relates to a cement admixture, an expansive material (an expansive additive), and a cement composition, which are, for example, used in the engineering and construction fields.

### Background Art

Reduction in crack of cement/concrete is important from the viewpoint of reliability, durability, beauties, etc., and more development of technologies regarding a cement admixture having an effect for improving them, namely a cement-based expansive material is desired.

Some proposals have been offered of a concrete expansive material capable of developing excellent expansion characteristics in small amounts (PTL 1), an expansive material for cement in which the surface of free lime is coated with calcium carbonate (PTL 2), and so on. In addition, in recent years, a proposal has been offered of joint use of an expansive material and a shrinkage reducer (PTL 3). US 3 884 710 A relates to expansive cements and expansive cement composition (PTL 5). US 3 303 037 A relates to hydraulic cements and to components thereof (PTL 6).

Meanwhile, a proposal has been offered of a slaking-resistance calcia clinker composed of a solid solution of calcia and strontium oxide (PTL 4). Meanwhile, an expansive material capable of producing ettringite as an expansive component through reaction of tricalcium aluminate, gypsum, and water is known (NPL 1).

### Citation List

### Patent Literature

PTL 1: Japanese Patent No. 4244261
PTL 2: JP 54-93020 A
PTL 3: JP 2003-12352 A
PTL 4: JP 57-205363 A
PTL 5: US 3 884 710 A
PTL 6: US 3 303 037 A

### Non-Patent Literature

NPL 1: "Symposium Committee Report on the High Performance/High Durability of Structures with Expanded Concrete (September 19, 2003)"

### Summary of Invention

### Technical Problem

A conventional expansive material has a characteristic feature of expanding until a material age of 7 days. But, there was involved such a problem that the drying shrinkage behavior does not change much compared to the case of not admixing with the expansive material. In addition, though the joint use of the expansive material and the shrinkage reducer is effective for inhibition of drying shrinkage, there was involved such a problem that long-term strength development properties are decreased.

The slaking-resistant calcia clinker described in PTL 4 is aimed at use as a basic refractory raw material, but PTL 4 does not describe at all that it is used as an expansive material for the purpose of inhibiting crack of cement/concrete.

From the above, an object of the present invention is to provide a cement admixture, an expansive material, and a cement composition, each permitting to give a large expansion to the cement/concrete over an initial material age after cement/concrete placement (for example, a material age of 2 to 7 days), to inhibit a drying shrinkage strain, and to inhibit a decrease of the long-term strength development properties.

### Solution to Problem

In view of the aforementioned problem, the present inventors made extensive and intensive investigations. As a result, it has been found that the foregoing problem can be solved by a cement admixture containing free lime and a hydraulic compound and also containing SrO as a chemical component, thereby leading to accomplishment of the present invention. Specifically, the present invention is as follows.
[1] A cement admixture containing free lime and a hydraulic compound and also containing SrO as a chemical compound, wherein
   the content of the free lime is 10 to 98 parts by mass based on 100 parts by mass of the cement admixture, characterized by further containing ZrO₂ as the chemical component, wherein the content of the ZrO₂ is 0.0001 to 5.0 parts by mass based on 100 parts by mass of the cement admixture.
[2] The cement admixture as set forth in [1], wherein the content of the SrO is 0.001 to 5.0 parts by mass based on 100 parts by mass of the cement admixture.
[3] The cement admixture as set forth in [1] or [2], further containing anhydrous gypsum.
[4] The cement admixture as set forth in any of [1] to [3], wherein the content of the free lime is 10 to 95 parts by mass based on 100 parts by mass of the cement admixture.
[5] The cement admixture as set forth in any of [1] to [4], wherein a Blaine's specific surface area is 2,000 to 6,000 cm²/g.
[6] The cement admixture as set forth in any of [1] to [5], wherein the content rate of particles of 10 pm or less is 30 to 60% by volume on a basis of volume, and the ratio of the content rate A of particles of 100 pm or less and the content rate B of particles of 10 pm or less (A/B) is 1.5 to 4.0.
[7] The cement admixture as set forth in any of [1] to [6], containing, as the hydraulic compound, one or more selected from the group consisting of 3CaO·Al₂O₃, 3CaO·3Al₂O₃·CaSO₄, 3CaO·SiO₂, 2CaO·SiO₂, 4CaO·Al₂O₃·Fe₂O₃, 6CaO·2Al₂O₃·Fe₂O₃, 6CaO·Al₂O₃·Fe₂O₃, and 2CaO·Fe₂O₃.
[8] The cement admixture as set forth in [7], wherein 3CaO·Al₂O₃ is contained as the hydraulic compound.
[9] Use of the cement admixture as set forth in any of [1] to [8] as an expansive material.
[10] A cement composition containing the cement admixture as set forth in any of [1] to [8] and a cement.

### Advantageous Effects of Invention

In accordance with the present invention, it is possible to aim at providing a cement admixture, an expansive material, and a cement composition, each permitting to give a large expansion to the cement/concrete over an initial material age after cement/concrete placement (for example, a material age of 2 to 7 days), to inhibit a drying shrinkage strain, and to inhibit a decrease of the long-term strength development properties.

### Description of Embodiments

The cement admixture, the expansive material, and the cement composition according to the embodiments of the present invention are hereunder described.

The terms "parts" and "%" used in this specification are on a mass basis unless specifically prescribed. In addition, the "cement/concrete" as referred to in the present invention is a general term of cement pastes, cement mortars, and cement concretes.

### [1. Cement Admixture and Expansive Material]

The cement admixture according to an embodiment of the present invention contains free lime and a hydraulic compound and also contains SrO and ZrO₂ as chemical component. Alternatively, the cement mixture according to an embodiment of the present invention contains free lime, a hydraulic compound, and anhydrous gypsum and also contains SrO and ZrO₂ as chemical component. In the case of referring to "100 parts of the cement admixture" on the occasion of describing the content of each component, it basically refers to "100 parts of the total of the free lime and the hydraulic compound", and on the occasion of containing the anhydrous gypsum, it refers to "100 parts of the total of the free lime, the hydraulic compound, and the anhydrous gypsum".

### (Free Lime)

The free lime is one typically called "f-CaO (free lime)". In view of the fact that the free lime is contained in the cement admixture according to an embodiment of the present invention, the expansion characteristics are given, and as a result, the drying shrinkage is inhibited.

The content of the free lime is preferably 10 to 98 parts, more preferably 10 to 95 parts, and still more preferably 40 to 90 parts based on 100 parts of the cement admixture. When the content of the free lime is 10 to 98 parts, the effect for inhibiting the drying shrinkage can be developed without causing a decrease of the long-term strength development properties.

In firing on the occasion of preparing the cement admixture, by increasing the firing temperature, or appropriately adjusting the blending amounts and particle sizes of charged raw materials other than the CaO raw material, the crystal particle diameter of the free lime in the cement admixture can be made large, or the content of the free lime can be increased.

### (Hydraulic Compound)

The hydraulic compound according to an embodiment of the present invention refers to 3CaO·Al₂O₃ (abbreviated as "C₃A"), ye'elimite expressed by 3CaO·3Al₂O₃·CaSO₄, 3CaO·SiO₂ (abbreviated as "C₃S"), calcium silicate expressed by 2CaO·SiO₂ (abbreviated as "C₂S"), 4CaO·Al₂O₃·Fe₂O₃ (abbreviated as "C₄AF"), 6CaO·2Al₂O₃·Fe₂O₃ (abbreviated as "C₆A₂F), calcium aluminoferrite expressed by 6CaO·Al₂O₃·Fe₂O₃, (abbreviated as "C₆AF"), calcium ferrite expressed by 2CaO·Fe₂O₃ (abbreviated as "C₂F"), or the like. Of these, one or more of thereof are preferably contained. Above all, one or more of C₃A, ye'elimite (especially 3CaO·3Al₂O₃·CaSO₄), C₄AF, and C₂S are preferably contained, and C₃A is more preferably contained.

In particular, when C₃A is contained, sintering of f-CaO can be promoted. From the viewpoint of promoting the sintering, the content of C₃A in the hydraulic compound is preferably 0.5 to 60% by mass, and more preferably 1 to 55% by mass. Although the C₃A includes cubic-CsA and orthorhombic-CsA which are different from each other in the crystal structure due to a difference of the alkali content, the C₃A in this specification means both or either one of cubic-C₃A and orthorhombic-CsA.

The content of the hydraulic compound is preferably 2 to 45 parts, more preferably 5 to 30 parts, and still more preferably 7 to 20 parts based on 100 parts of the cement admixture. When the content of the hydraulic compound is 2 to 45 parts, high expansion characteristics can be given.

### (Anhydrous Gypsum)

Although the anhydrous gypsum is an arbitrary component, when added, the content of the anhydrous gypsum is preferably 3 to 50 parts, more preferably 10 to 40 parts, and still more preferably 20 to 30 parts based on 100 parts of the cement admixture.

In the case where the content of the anhydrous gypsum in the cement admixture is small, anhydrous gypsum can be separately added in an amount ranging from 3 to 50 parts based on 100 parts of the cement admixture.

### (SrO)

The cement admixture according to an embodiment of the present invention contains SrO as chemical component. When a fixed amount of SrO is solid-solved in the cement admixture (or the expansive material), it is possible to reduce the drying shrinkage (on or after a material age of 7 days). In addition, it is also possible to improve the storage stability.

The content of SrO is preferably 0.001 to 5.0 parts by mass, more preferably 0.001 to 0.5 parts by mass, and still more preferably 0.005 to 0.5 parts by mass based on 100 parts by mass of the cement admixture. In particular, when the content of SrO is 0.001 to 0.5 parts by mass, the effect for reducing the drying shrinkage becomes more favorable.

### (Other Component)

The cement admixture according to the present invention further contains ZrO₂ as chemical component. The content of ZrO₂ is 0.0001 to 5.0 parts by mass, more preferably 0.0001 to 0.1 parts by mass, and still more preferably 0.0003 to 0.05 parts by mass. In particular, when the content of ZrO₂ is 0.0001 to 0.1 parts by mass, the fluidity can be improved.

A Blaine's specific surface area of the cement admixture according to an embodiment of the present invention is preferably 2,000 to 6,000 cm²/g, and more preferably 2,500 to 5,000 cm²/g. When the Blaine's specific surface area is 2,000 to 6,000 cm²/g, the breakdown of the concrete structure to be caused due to expansion over an extended period of time can be prevented from occurring, and the expansion performance can be maintained favorable.

The Blaine's specific surface area value in this specification can be determined in conformity with JIS R5201 (Physical Test Method for Cement).

From the viewpoint of reduction of a slump loss, assurance of the amount of expansion with a small addition amount, and prevention of pop-out prevention, it is preferred that the content rate of particles of 10 pm or less is 30 to 60% by volume on a basis of volume, and the ratio of the content rate A of particles of 100 pm or less and the content rate B of particles of 10 pm or less (A/B) is 1.5 to 4.0. It is more preferred that the content rate of particles of 10 pm or less is 20 to 60% by mass, and the ratio of the content rate A of particles of 100 pm or less and the content rate B of particles of 10 pm or less (A/B) is 1.8 to 3.0.

The content rate of particles in this specification is calculated on the basis of particle size distribution resulting from ultrasonically dispersing the cement admixture in ethanol for 1 minute by using a laser diffraction/scattering particle size distribution measuring device and then performing the measurement on a volume basis under conditions at a sample refractive index of 1.770 and at a dispersion medium refractive index of 1.360.

The cement admixture of the present invention is obtained by appropriately mixing a CaO raw material, an Al₂O₃ raw material, an Fe₂O₃ raw material, an SiO₂ raw material, a CaSO₄ raw material, an SrO raw material, and a ZrO₂ raw material and then firing the mixture.

Examples of the CaO raw material include lime stone and slaked lime; examples of the Al₂O₃ raw material include bauxite and aluminum ashes; examples of the Fe₂O₃ raw material include copper slag and commercially available iron oxide; examples of the SiO₂ raw material include silica stone; and examples of the CaSO₄ raw material include gypsum dihydrate, gypsum hemihydrate, and anhydrous gypsum.

Although the SrO raw material is not particularly restricted, examples thereof include celestite, strontianite, strontium oxide, and strontium carbonate.

Although the ZrO₂ raw material is not particularly restricted, examples thereof include zirconium oxide, zirconium hydroxide, zirconium carbonate, zirconium oxychloride, zirconium sulfate, zirconium acetate, organic acid zirconium, and zircon sand.

In the case where SrO or ZrO₂ is contained in the CaO raw material, the Al₂O₃ raw material, the SiO₂ raw material, or the CaSO₄ raw material, it is not needed to newly add the SrO raw material or the ZrO₂ raw material.

Although impurities are occasionally contained in these raw materials, such does not matter within a range where the effects of the present invention are not impaired. Examples of the impurities include MgO, TiO₂, MnO, P₂O₅, Na₂O, K₂O, Li₂O, sulfur, fluorine, and chlorine.

The cement admixture can be produced by blending the aforementioned raw materials so as to attain the desired mineral composition and also the desired chemical composition regarding SrO and appropriately performing pulverization, etc., followed by firing.

Although the firing method is not particularly restricted, the firing is performed using an electric furnace, a kiln, or the like at a temperature of preferably 1,100 to 1,600°C, and more preferably 1,200 to 1,500°C. When the firing temperature is lower than 1,100°C, the expansion performance is not satisfactory, whereas when it is higher than 1,600°C, the anhydrous gypsum is occasionally decomposed.

In the case of performing the pulverization, it is preferred to perform the pulverization by a known method such that the Blaine's specific surface area is 2,000 to 6,000 cm²/g.

The content of the minerals in the thus prepared cement admixture can be confirmed by a conventionally general analysis method. For example, the minerals can be quantitatively determined by setting a pulverized sample on a powder X-ray diffraction device, thereby confirming the produced minerals and also analyzing data by the Rietveld method. In addition, the amounts of the minerals can be determined through calculation on the basis of the identification results of the chemical components and the powder X-ray diffraction analyst. In an embodiment of the present invention, it is preferred to determine the amounts of the minerals through calculation on the basis of the identification results of the chemical components and powder X-ray diffraction analysis.

The contents of the chemical components can be determined with fluorescent X-rays.

The cement admixture according to an embodiment of the present invention preferably contains particles in which the free lime, the hydraulic compound, the anhydrous gypsum, and SrO are present in the same particle. In addition, in the case where the cement admixture contains ZrO₂, it is also preferred that this is present in the same particle.

Whether or not the free lime, the hydraulic compound, the anhydrous gypsum, and SrO, and further ZrO₂ are present in the same particle can be confirmed with an electron microscope or the like. Specifically, whether or not the free lime, the hydraulic compound, the anhydrous gypsum, and SrO, and further ZrO₂ are present in the same particle can be confirmed by wrapping and embedding the cement admixture with a resin, performing a surface treatment with an argon ion beam, and not only observing the structure of the cross section of the particle but also performing an elemental analysis.

The foregoing cement admixture according to an embodiment of the present invention is preferably used as, for example, an expansive material. That is, the expansive material according to an embodiment of the present invention is composed of the already-mentioned cement admixture. According to this, it is permitted to give a large expansion to the concrete over an initial material age after concrete placement (for example, a material age of 2 to 7 days), to inhibit a drying shrinkage strain, and to inhibit a decrease of the long-term strength development properties.

### [3. Cement Composition]

The cement composition according an embodiment of the present invention is one containing the already-mentioned cement admixture. Here, examples of the cement to be used in the cement composition include various Portland cements, such as normal, high-early-strength, ultra-high-early-strength, low heat, and moderate heat Portland cements; various mixed cements having blast furnace slag, fly ash, or silica mixed in such a Portland cement; filler cements having a limestone powder, an air-cooled blast furnace slag fine powder, etc. mixed therein; and Portland cements, such as an environmentally friendly cement (eco-cement) produced using, as the raw material, an urban refuse incineration ash or a sewage sludge incineration ash. These can be used alone or in combination of two or more thereof. The cement admixture may be the expansive material according to an embodiment of the present invention.

In an embodiment according to the present invention, the cement and the cement admixture as well as fine aggregate, such as sand, and coarse aggregates, such as gravel, may be used in combination with one or more selected from the group consisting of a high-early strengthening agent, a rapid-hardening mortar-accelerator, a water-reducing agent, an AE water-reducing agent, a high-performance water-reducing agent, a high-performance AE water-reducing agent, a fluidizing agent, a defoaming agent, a thickening agent, a rustproofing agent, an anti-freezing agent, a shrinkage-reducing agent, a coagulation-reducing agent, an inhibitor for heat of hydration, a polymer emulsion, a clay mineral, such as bentonite, an anion exchanger such as hydrotalcite, a slag, such as a granulated blast furnace slag fine powder and an air-cooled blast furnace slag fine powder, and an admixture, such as a limestone fine powder, a siliceous fine powder, gypsum, and calcium silicate, within a range where the object of the present invention is not substantially impaired. In addition, it is possible to use, as an organic material, fibrous materials, such as a vinylon fiber, an acrylic fiber, and a carbon fiber, in combination.

Since the use amount (blending amount) of the cement admixture (or the expansive material) varies depending upon blending of the concrete, it is not particularly restricted. However, in general, it is preferably 3 to 12 parts by mass, and more preferably 4 to 7 parts by mass in 100 parts by mass of the cement composition containing the cement and the cement admixture (or the expansive material). When it is 3 parts by mass or more, a sufficient expansion performance is obtained. In addition, when it is 12 parts by mass or less, over-expansion is not caused, and the generation of expansive cracks in the concrete can be prevented from occurring.

### Examples

### [Experimental Reference Example A-1] (not according to the invention)

A CaO raw material, an Al₂O₃ raw material, an Fe₂O₃ raw material, an SiO₂ raw material, a CaSO₄ raw material, and an SrO raw material were blended in a mineral proportion and a proportion as the chemical component as shown in Table 1, and after mixing and pulverizing, the resultant was fired at 1,350°C to synthesize a clinker. The clinker was then pulverized using a ball mill to an extent of a Blaine's specific surface area of 3,000 cm²/g to prepare a cement admixture.

Using this cement admixture, 7 parts by mass of the cement admixture was used in 100 parts by mass of a cement composition composed of cement and the cement admixture, to prepare a mortar having a water/cement composition ratio of 50% by mass and a cement composition/sand ratio of 1/3 (mass ratio) in a room at 20°C. Then, the mortar was measured in terms of a percent length change and compressive strength.

In addition, with respect to the cement admixture, a ratio (A/B) of the content rate A of particles of 100 pm or less and the content rate B of particles of 10 pm or less was determined.

### (Used Materials)

CaO raw material: Limestone
Al₂O₃ raw material: Bauxite
Fe₂O₃ raw material: Iron oxide
SiO₂ raw material: Silica stone
CaSO₄ raw material: Gypsum dihydrate
SrO raw material: Strontianite
ZrO₂ raw material: Zircon sand
Sand: JIS standard sand
Cement: Commercially available normal Portland cement

### (Test Method)

Chemical composition: Determined with fluorescent X-ray.

Ratio (A/B) of the content rate A of particles of 100 pm or less and the content rate B of particles of 10 pm or less: A laser diffraction/scattering particle size distribution measuring device, LA-920, manufactured by HORIBA, Ltd. was used. The cement admixture was ultrasonically dispersed in ethanol for 1 minute, and the particle size distribution on a volume basis under conditions at a sample refractive index of 1.770 and at a dispersion medium refractive index of 1.360 was measured. From such particle size distribution, the content rate A of particles of 100 pm or less and the content rate B of particles of 10 pm or less were determined, and the ratio A/B was calculated.

Mineral composition: Determined from calculation on a basis of the identification results of the chemical composition and the powder X-ray diffraction.

Compressive strength: A test piece of 4 × 4 × 16 cm was prepared and measured for the compressive strength at the material ages of 7 days (7d) and 28 days (28d) in conformity with JIS R5201.

**Table 1**

| Experiment No. | Cement admixture | | | | | | | | | Addition ratio of expansive material (parts) | | | | | | | Remarks |
|---|---|---|---|---|---|---|---|---|---|---|---|---|---|---|---|---|---|
| | Mineral composition (parts) | | | | | | Chemical composition | Blaine's specific surface area (cm²/g) | A/B | | Percent length change (µ) | | | | Compressive strength (N/mm²) | | |
| | Free lime | Hydraulic compound | | | | | | | | | | | | | | | |
| | | Ye'elimite | C4AF | C2S | Total | CaSO₄ | SrO | | | | 0d | 7d | 28d | Difference from 7d until 28d | 7d | 28d | |
| 1-1 | 10 | 31 | 5 | 4 | 40 | 50 | 0.010 | 3000 | 2.1 | 7 | 0 | 190 | -50 | -240 | 34.2 | 51.4 | Reference Example |
| 1-2 | 10 | 32 | 7 | 11 | 50 | 45 | 0.010 | 3000 | 2.1 | 7 | 0 | 190 | -50 | -240 | 34.2 | 51.4 | Reference Example |
| 1-3 | 20 | 30 | 2 | 3 | 35 | 45 | 0.010 | 3000 | 2.1 | 7 | 0 | 245 | 0 | -245 | 33.9 | 51.0 | Reference Example |
| 1-4 | 40 | 20 | 5 | 5 | 30 | 30 | 0.010 | 3000 | 2.1 | 7 | 0 | 435 | 300 | -135 | 32.8 | 50.2 | Reference Example |
| 1-5 | 50 | 10 | 5 | 5 | 20 | 30 | 0.001 | 3000 | 2.1 | 7 | 0 | 455 | 240 | -215 | 32.7 | 49.2 | Reference Example |
| 1-6 | 50 | 10 | 5 | 5 | 20 | 30 | 0.010 | 3000 | 2.1 | 7 | 0 | 452 | 300 | -152 | 32.7 | 49.4 | Reference Example |
| 1-7 | 50 | 10 | 5 | 5 | 20 | 30 | 0.500 | 3000 | 2.1 | 7 | 0 | 445 | 330 | -115 | 32.8 | 49.3 | Reference Example |
| 1-8 | 50 | 5 | 0 | 25 | 30 | 20 | 0.010 | 3000 | 2.1 | 7 | 0 | 423 | 350 | -73 | 32.8 | 48.7 | Reference Example |
| 1-9 | 60 | 5 | 0 | 5 | 10 | 30 | 0.010 | 3000 | 2.1 | 7 | 0 | 522 | 400 | -122 | 32.3 | 48.3 | Reference Example |
| 1-10 | 90 | 1 | 2 | 2 | 5 | 5 | 0.010 | 3000 | 2.1 | 7 | 0 | 1000 | 780 | -220 | 29.1 | 48.4 | Reference Example |
| 1-11 | 95 | 0 | 1 | 1 | 2 | 3 | 0.010 | 3000 | 2.1 | 7 | 0 | 1200 | 900 | -300 | 27.7 | 48.1 | Reference Example |
| 1-12 | 95 | 0 | 2 | 2 | 4 | 1 | 0.010 | 3000 | 2.1 | 7 | 0 | 1271 | 1000 | -271 | 27.2 | 48.2 | Reference Example |
| 1-13 | 56 | 2 | 2 | 10 | 14 | 30 | 0.010 | 3000 | 2.1 | 7 | 0 | 452 | 300 | -152 | 32.7 | 49.2 | Reference Example |
| 1-14 | 100 | 0 | 0 | 0 | 0 | 0 | 0.000 | 3000 | 2.1 | 4 | 0 | 449 | 0 | -449 | 32.7 | 42.0 | Comparative Example |
| 1-15 | 100 | 0 | 0 | 0 | 0 | 0 | 0.000 | 3000 | 2.1 | 7 | 0 | 2005 | 1000 | -1005 | 21.4 | 39.3 | Comparative Example |
| 1-16 | 100 | 0 | 0 | 0 | 0 | 0 | 0.010 | 3000 | 2.1 | 4 | 0 | 475 | 100 | -375 | 32.5 | 34.5 | Comparative Example |
| 1-17 | 100 | 0 | 0 | 0 | 0 | 0 | 0.010 | 3000 | 2.1 | 7 | 0 | 2800 | 1400 | -1400 | 14.1 | 31.9 | Comparative Examnle |
| 1-18 | 10 | 32 | 7 | 11 | 50 | 45 | 0.000 | 3000 | 2.1 | 7 | 0 | 183 | -150 | -333 | 34.2 | 51.4 | Comparative Example |
| 1-19 | 20 | 30 | 2 | 3 | 35 | 45 | 0.000 | 3000 | 2.1 | 7 | 0 | 245 | 0 | -245 | 33.9 | 51.0 | Comparative Example |
| 1-20 | 50 | 10 | 5 | 5 | 20 | 30 | 0.000 | 3000 | 2.1 | 7 | 0 | 456 | 140 | -316 | 32.7 | 47.0 | Comparative Example |
| 1-21 | 70 | 10 | 5 | 5 | 20 | 10 | 0.000 | 3000 | 2.1 | 7 | 0 | 1250 | 250 | -1000 | 27.4 | 40.8 | Comparative Example |
| 1-22 | 50 | 10 | 5 | 5 | 20 | 30 | 0.000 | 3000 | 2.1 | 7 | 0 | 493 | 170 | -323 | 32.4 | 47.1 | Comparative Example |

### [Experimental Example A-2]

The same experiment as in Experiment 1 was performed, except that in Experiment No. 1-6, a ZrO₂ raw material was used, and the amount of SrO was adjusted, thereby changing the SrO amount and the ZrO₂ amount in the clinker as shown in the following Table 2. The results are shown in Table 2.

### (Test Method)

Flow test: The mortar was kneaded in conformity with JIS R5201-2015 "Physical Test Method for Cement", and just after kneading, 15-point flow values were measured. Temperature, humidity, and mortar blending were the same as those in the compressive strength testing. Standard sand was used for testing.

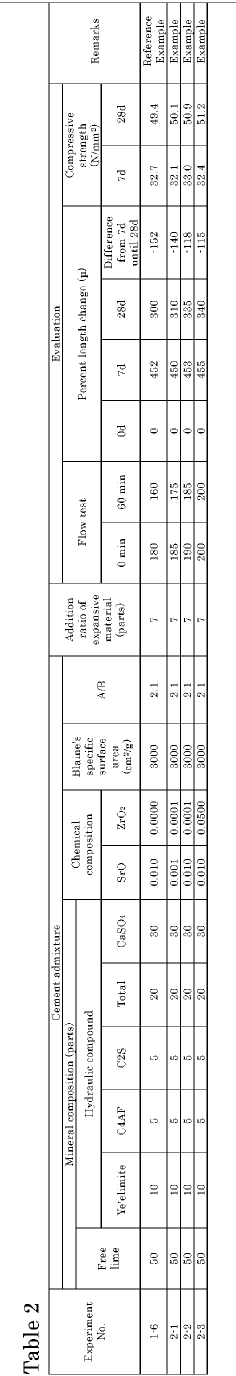

### [Experimental Reference Example B-1] (not according to the invention)

A CaO raw material, an Al₂O₃ raw material, an Fe₂O₃ raw material, an SiO₂ raw material, and an SrO raw material were blended in a mineral proportion and a proportion as the chemical component as shown in Table 3, and after mixing and pulverizing, the resultant was fired at 1,350°C to synthesize a clinker. The clinker was then pulverized using a ball mill to an extent of a Blaine's specific surface area of 3,500 cm²/g to prepare a cement admixture.

Using this cement admixture, 4 or 7 parts by mass of the cement admixture was used in 100 parts by mass of a cement composition composed of cement and the cement admixture, to prepare a mortar having a water/cement composition ratio of 50% by mass and a cement composition/sand ratio of 1/3 (mass ratio) in a room at 20°C. Then, the mortar was measured in terms of a percent length change and compressive strength.

In addition, with respect to the cement admixture, a ratio (A/B) of the content rate A of particles of 100 pm or less and the content rate B of particles of 10 pm or less was determined.

### (Used Materials)

CaO raw material: Limestone
Al₂O₃ raw material: Bauxite
Fe₂O₃ raw material: Iron oxide
SiO₂ raw material: Silica stone
CaSO₄ raw material: Natural anhydrous gypsum
SrO raw material: Strontianite
ZrO₂ raw material: Zircon sand
Sand: JIS standard sand
Cement: Commercially available normal Portland cement

### (Test Method)

Chemical composition: Determined with fluorescent X-ray

Ratio (A/B) of the content rate A of particles of 100 pm or less and the content rate B of particles of 10 pm or less: A laser diffraction/scattering particle size distribution measuring device, LA-920, manufactured by HORIBA, Ltd. was used. The cement admixture was ultrasonically dispersed in ethanol for 1 minute, and the particle size distribution on a volume basis under conditions at a sample refractive index of 1.770 and at a dispersion medium refractive index of 1.360 was measured. From such particle size distribution, the content rate A of particles of 100 pm or less and the content rate B of particles of 10 pm or less were determined, and the ratio A/B was calculated.

Mineral composition: Determined from calculation on a basis of the identification results of the chemical composition and the powder X-ray diffraction.

Percent length change: Measured at the material ages of 7 days (7d) and 28 days (28d) in conformity with JIS A6202.

Compressive strength: A test piece of 4 × 4 × 16 cm was prepared and measured for the compressive strength at the material ages of 7 days (7d) and 28 days (28d) in conformity with JIS R5201.

**Table 3**

| Experiment No. | Cement admixture | | | | | | | | | Addition ratio of expansive material (parts) | | | | | | | Remarks |
|---|---|---|---|---|---|---|---|---|---|---|---|---|---|---|---|---|---|
| | Mineral composition (parts) | | | | | | Chemical composition | Blaine's specific surface area (cm²/g) | A/B | | Percent length change (× 10⁻⁶) | | | | Compressive strength (N/mm²) | | |
| | Free lime | Hydraulic compound | | | | | | | | | | | | | | | |
| | | Ye'elimite | C3A | C2S | Total | CaSO₄ | SrO | | | | 0d | 7d | 28d | Difference from 7d until 28d | 7d | 28d | |
| 1-1 | 20 | 62 | 10 | 8 | 80 | 0 | 0.010 | 3,500 | 2.1 | 7 | 0 | 240 | -10 | -250 | 34.2 | 51.4 | Reference Example |
| 1-2 | 17 | 53 | 12 | 18 | 83 | 0 | 0.010 | 3,500 | 2.1 | 7 | 0 | 243 | -10 | -253 | 34.2 | 51.4 | Reference Example |
| 1-3 | 36 | 55 | 4 | 5 | 64 | 0 | 0.010 | 3,500 | 2.1 | 7 | 0 | 288 | 40 | -248 | 33.9 | 51.0 | Reference Example |
| 1-4 | 57 | 29 | 7 | 7 | 43 | 0 | 0.010 | 3,500 | 2.1 | 7 | 0 | 479 | 340 | -139 | 32.8 | 50.2 | Reference Example |
| 1-5 | 71 | 14 | 7 | 7 | 29 | 0 | 0.001 | 3,500 | 2.1 | 7 | 0 | 500 | 280 | -220 | 32.7 | 49.2 | Reference Example |
| 1-6 | 71 | 14 | 7 | 7 | 29 | 0 | 0.010 | 3,500 | 2.1 | 7 | 0 | 501 | 345 | -156 | 32.7 | 49.4 | Reference Example |
| 1-7 | 71 | 14 | 7 | 7 | 29 | 0 | 0.500 | 3,500 | 2.1 | 7 | 0 | 499 | 371 | -128 | 32.8 | 49.3 | Reference Example |
| 1-8 | 63 | 6 | 0 | 31 | 38 | 0 | 0.010 | 3,500 | 2.1 | 7 | 0 | 460 | 390 | -70 | 32.8 | 48.7 | Reference Example |
| 1-9 | 86 | 7 | 0 | 7 | 14 | 0 | 0.010 | 3,500 | 2.1 | 7 | 0 | 574 | 442 | -132 | 32.3 | 48.3 | Reference Example |
| 1-10 | 95 | 1 | 2 | 2 | 5 | 0 | 0.010 | 3,500 | 2.1 | 7 | 0 | 1,040 | 820 | -220 | 29.1 | 48.4 | Reference Example |
| 1-11 | 98 | 0 | 1 | 1 | 2 | 0 | 0.010 | 3,500 | 2.1 | 7 | 0 | 1,242 | 843 | -399 | 27.7 | 48.1 | Reference Example |
| 1-12 | 90 | 0 | 5 | 5 | 10 | 0 | 0.010 | 3,500 | 2.1 | 7 | 0 | 1,400 | 1,045 | -355 | 27.2 | 48.2 | Reference Example |
| 1-13 | 80 | 3 | 3 | 14 | 20 | 0 | 0.010 | 3,500 | 2.1 | 7 | 0 | 501 | 341 | -160 | 32.7 | 49.2 | Reference Example |
| 1-14 | 100 | 0 | 0 | 0 | 0 | 0 | 0.000 | 3,500 | 2.1 | 4 | 0 | 500 | 40 | -460 | 32.7 | 42.0 | Comparative Example |
| 1-15 | 100 | 0 | 0 | 0 | 0 | 0 | 0.000 | 3,500 | 2.1 | 7 | 0 | 2,050 | 1,042 | -1,008 | 21.4 | 39.3 | Comparative Example |
| 1-16 | 100 | 0 | 0 | 0 | 0 | 0 | 0.010 | 3,500 | 2.1 | 4 | 0 | 510 | 141 | -369 | 32.5 | 34.5 | Comparative Example |
| 1-17 | 100 | 0 | 0 | 0 | 0 | 0 | 0.010 | 3,500 | 2.1 | 7 | 0 | 2,850 | 1,442 | -1,408 | 14.1 | 31.9 | Comparative Examnle |
| 1-18 | 10 | 32 | 7 | 11 | 50 | 45 | 0.000 | 3,500 | 2.1 | 7 | 0 | 220 | -111 | -333 | 34.2 | 51.4 | Comparative Example |
| 1-19 | 20 | 30 | 2 | 3 | 35 | 45 | 0.000 | 3,500 | 2.1 | 7 | 0 | 300 | 41 | -259 | 33.9 | 51.0 | Comparative Example |
| 1-20 | 50 | 10 | 5 | 5 | 20 | 30 | 0.000 | 3,500 | 2.1 | 7 | 0 | 496 | 181 | -315 | 32.7 | 47.0 | Comparative Example |
| 1-21 | 70 | 10 | 5 | 5 | 20 | 10 | 0.000 | 3,500 | 2.1 | 7 | 0 | 1,300 | 291 | -1,009 | 27.4 | 40.8 | Comparative Example |
| 1-22 | 50 | 10 | 5 | 5 | 20 | 30 | 0.000 | 3,500 | 2.1 | 7 | 0 | 530 | 210 | -320 | 32.4 | 47.1 | Comparative Example |

### [Experimental Example B-2]

The same experiment as in Experiment B-1 was performed, except that in Experiment No. 1-12, a ZrO₂ raw material was used, and the amount of SrO was adjusted, thereby changing the SrO amount and the ZrO₂ amount in the clinker as shown in the following Table 4. The results are shown in Table 4.

### (Test Method)

Flow test: The mortar was kneaded in conformity with JIS R5201-2015 "Physical Test Method for Cement", and just after kneading (0 min) and 60 minutes elapsing after kneading, 15-point flow values were measured. Temperature, humidity, and mortar blending were the same as those in the compressive strength testing. Standard sand was used for testing.

**Table 4**

| Experiment No. | Cement admixture | | | | | | | | | Addition ratio of expansive material (parts) | Evaluation | | | | | | | Remarks |
|---|---|---|---|---|---|---|---|---|---|---|---|---|---|---|---|---|---|---|
| | Mineral composition (parts) | | | | | Chemical composition | | Blaine's specific surface area (cm²/g) | A/B | | Flow test (mm) | | Percent length change (× 10⁻⁶) | | | Compressive strength (N/mm²) | | |
| | Free lime | Hydraulic compound | | | | | | | | | | | | | | | | |
| | | Ye'elimite | C3A | C2S | Total | SrO | ZrO₂ | | | | 0 min | 60 min | 7d | 28d | Difference from 7d until 28d | 7d | 28d | |
| 1-12 | 90 | 0 | 5 | 5 | 10 | 0.010 | 0.0000 | 3,500 | 2.1 | 7 | 180 | 160 | 1400 | 1045 | -355 | 27.2 | 48.2 | Reference Example |
| 2-1 | 90 | 0 | 5 | 5 | 10 | 0.001 | 0.0001 | 3,500 | 2.1 | 7 | 185 | 175 | 1402 | 1066 | -336 | 27.4 | 49.2 | Example |
| 2-2 | 90 | 0 | 5 | 5 | 10 | 0.010 | 0.0001 | 3,500 | 2.1 | 7 | 190 | 185 | 1398 | 1090 | -308 | 27.1 | 48.7 | Example |
| 2-3 | 90 | 0 | 5 | 5 | 10 | 0.010 | 0.0500 | 3,500 | 2.1 | 7 | 200 | 200 | 1401 | 1101 | -300 | 26.9 | 49.2 | Example |

### Industrial Applicability

The cement admixture of the present invention can be widely used in the engineering and construction fields because it is able to give a large expansion to the concrete over an initial material age of 2 days to 7 days after concrete placement and to inhibit a drying shrinkage strain, and it is free from a decrease of the long-term strength development properties.

## Claims

1. A cement admixture comprising free lime and a hydraulic compound and also comprising SrO as a chemical compound, wherein
the content of the free lime is 10 to 98 parts by mass based on 100 parts by mass of the cement admixture **characterized by** further comprising ZrO₂ as the chemical component, wherein the content of the ZrO₂ is 0.0001 to 5.0 parts by mass based on 100 parts by mass of the cement admixture.

2. The cement admixture according to claim 1, wherein the content of the SrO is 0.001 to 5.0 parts by mass based on 100 parts by mass of the cement admixture.

3. The cement admixture according to claim 1 or 2, further comprising anhydrous gypsum.

4. The cement admixture according to any one of claims 1 to 3, wherein the content of the free lime is 10 to 95 parts by mass based on 100 parts by mass of the cement admixture.

5. The cement admixture according to any one of claims 1 to 4, wherein a Blaine's specific surface area is 2,000 to 6,000 cm²/g.

6. The cement admixture according to any one of claims 1 to 5, wherein the content rate of particles of 10 pm or less is 30 to 60% by volume on a basis of volume, and the ratio of the content rate A of particles of 100 pm or less and the content rate B of particles of 10 pm or less (A/B) is 1.5 to 4.0.

7. The cement admixture according to any one of claims 1 to 6, containing, as the hydraulic compound, one or more selected from the group consisting of SCaO·Al₂O₃, 3CaO·3Al₂O₃·CaSO₄, 3CaO·SiO₂, 2CaO·SiO₂, 4CaO·Al₂O₃·Fe₂O₃, 6CaO·2Al₂O₃·Fe₂O₃, 6CaO·Al₂O₃·Fe₂O₃, and 2CaO·Fe₂O₃.

8. The cement admixture according to claim 7, containing, as the hydraulic compound, 3CaO·Al₂O₃.

9. Use of the cement admixture according to any one of claims 1 to 8 as an expansive material.

10. A cement composition comprising the cement admixture according to any one of claims 1 to 8 and a cement.

## Patentansprüche

1. Zementbeimischung, umfassend freien Kalk und eine hydraulische Verbindung und ebenso umfassend Sr0 als eine chemische Verbindung, wobei
der Gehalt des freien Kalks 10 bis 98 Masseteile bezogen auf 100 Masseteile der Zementbeimischung beträgt, **dadurch gekennzeichnet, dass** sie ferner ZrO₂ als chemische Komponente umfasst, wobei der Gehalt von ZrO₂ 0,0001 bis 5,0 Masseteile bezogen auf 100 Masseteile der Zementbeimischung beträgt.

2. Zementbeimischung nach Anspruch 1, wobei der Gehalt von Sr0 0,001 bis 5,0 Masseteile bezogen auf 100 Masseteile der Zementbeimischung beträgt.

3. Zementbeimischung nach Anspruch 1 oder 2, ferner umfassend wasserfreien Gips.

4. Zementbeimischung nach einem der Ansprüche 1 bis 3, wobei der Gehalt des freiem Kalks 10 bis 95 Masseteile bezogen auf 100 Masseteile der Zementbeimischung beträgt.

5. Zementbeimischung nach einem der Ansprüche 1 bis 4, wobei eine spezifische Oberfläche nach Blaine 2.000 bis 6.000 cm²/g beträgt.

6. Zementbeimischung nach einem der Ansprüche 1 bis 5, wobei der Gehaltsanteil von Teilchen mit 10 µm oder weniger 30 bis 60 Vol.-% auf Volumenbasis beträgt und das Verhältnis des Gehaltsanteils A von Teilchen mit 100 µm oder weniger und der Gehaltsanteil B von Teilchen mit 10 µm oder weniger (A/B) 1,5 bis 4,0 beträgt.

7. Zementbeimischung nach einem der Ansprüche 1 bis 6, die als hydraulische Verbindung eine oder mehrere Verbindungen enthält, ausgewählt aus der Gruppe bestehend aus 3CaO·Al₂O₃, 3CaO·3Al₂O₃·CaSO₄, 3CaO·SiO₂, 2CaO·SiO₂, 4CaO·Al₂O₃·Fe₂O₃, 6CaO·2Al₂O₃·Fe₂O₃, 6CaO·Al₂O₃·Fe₂O₃ und 2CaO·Fe₂O₃.

8. Zementbeimischung nach Anspruch 7, die als hydraulische Verbindung 3CaO·Al₂O₃ enthält.

9. Verwendung der Zementbeimischung nach einem der Ansprüche 1 bis 8 als Expansionsmaterial.

10. Zementzusammensetzung, umfassend die Zementbeimischung nach einem der Ansprüche 1 bis 8 und einen Zement.

## Revendications

1. Adjuvant du ciment comprenant de la chaux libre et un composé hydraulique et comprenant également SrO en tant que composé chimique, dans lequel
la teneur en chaux libre est de 10 à 98 parties en masse sur la base de 100 parties en masse de l'adjuvant du ciment **caractérisé en ce qu'**il comprend en outre ZrO₂ en tant que composant chimique, dans lequel la teneur en ZrO₂ est de 0,0001 à 5,0 parties en masse sur la base de 100 parties en masse de l'adjuvant du ciment.

2. Adjuvant du ciment selon la revendication 1, dans lequel la teneur en SrO est de 0,001 à 5,0 parties en masse sur la base de 100 parties en masse de l'adjuvant du ciment.

3. Adjuvant du ciment selon la revendication 1 ou 2, comprenant en outre du gypse anhydre.

4. Adjuvant du ciment selon l'une quelconque des revendications 1 à 3, dans lequel la teneur en chaux libre est de 10 à 95 parties en masse pour 100 parties en masse de l'adjuvant du ciment.

5. Adjuvant du ciment selon l'une quelconque des revendications 1 à 4, dans lequel la surface spécifique de Blaine est de 2 000 à 6 000 cm²/g.

6. Adjuvant du ciment selon l'une quelconque des revendications 1 à 5, dans lequel le taux de teneur en particules inférieures ou égales à 10 µm est de 30 à 60 % en volume sur une base volumique, et le rapport du taux de teneur A en particules inférieures ou égales à 100 µm et le taux de teneur B en particules inférieures ou égales à 10 µm (A/B) est de 1,5 à 4,0.

7. Adjuvant du ciment selon l'une quelconque des revendications 1 à 6, contenant, en tant que composé hydraulique, un ou plusieurs éléments choisis dans le groupe constitué de 3CaO·Al₂O₃, 3CaO·3Al₂O₃·CaSO₄, 3CaO·SiO₂, 2CaO·SiO₂, 4CaO·Al₂O₃·Fe₂O₃, 6CaO·2Al₂O₃·Fe₂O₃, 6CaO·Al₂O₃·Fe₂O₃ et 2CaO·Fe₂O₃.

8. Adjuvant du ciment selon la revendication 7, contenant, comme composé hydraulique, 3CaO·Al₂O₃.

9. Utilisation de l'adjuvant du ciment selon l'une quelconque des revendications 1 à 8 comme matériau expansif.

10. Composition de ciment comprenant l'adjuvant du ciment selon l'une quelconque des revendications 1 à 8, et un ciment.
